# EUROPEAN PATENT SPECIFICATION

(11) **EP 1 855 519 B1**
(45) Date of publication and mention of the grant of the patent: **03.10.2018**
(21) Application number: 06716973.0
(22) Date of filing: 07.03.2006
(51) Int. Cl.: A01K 1/015

(54) **A FLOOR MAT TO BE USED BY ANIMALS**
FUSSBODENMATTE ZUR VERWENDUNG DURCH TIERE
TAPIS POUR ANIMAUX

(30) Priority: 07.03.2005 SE 0500511
(43) Date of publication of application: 21.11.2007
(73) Proprietor: DeLaval Holding AB, 147 21 Tumba (SE)
(72) Inventor: FLORELL, Erik, 585 92 Linköping (SE)
(74) Representative: Lilliehorn, Tobias
(86) International application number: PCT/SE2006/000287
(87) International publication number: WO 2006/096118

(56) References cited:
- WO-A1-94/00978
- WO-A1-94/00978
- NL-C2- 1 017 416
- US-A- 2 665 664
- US-A- 2 665 664
- US-A- 3 066 646
- US-A- 3 066 646
- US-A- 3 699 926
- US-A- 3 699 926
- US-A- 6 053 126

## Description

### THE BACKGROUND OF THE INVENTION AND PRIOR ART

The present invention relates to a floor mat to be used by at least one animal, wherein the floor mat, in a mounted state, comprises an upper surface, which has a contact surface with an animal, and a lower surface, which is arranged to be in a contact with an underlying surface.

It has been proved that cows which lie down during a main part of the time produce more milk than cows which stand up during a main part of the time. This concerns especially cows which are tied in a stall. However, it also concerns free walking cows, which have the possibility to enter a stall spontaneously for resting. Usually, the floor in a conventional stall constitutes of a concrete floor provided with a layer of straw or the like. It is not especially comfortable for a heavy milking cow to lie on such a bed of straw. Furthermore, the relatively hard floor surface in the stall accomplishes heavy strains on joints and hooves of the cow when she gets down to a lying position and gets up to a standing position. Therefore, a main part of the cows prefer to stand up in the stalls.

US 3,066,646 shows a bedding unit for cattle. The bedding unit comprises a resilient body of a foamed plastic material, which is enclosed by an envelope of a waterproof plastic material. The bedding unit is formed to lie on the ground in a pen in which the cattle are to be housed. The bedding unit has a thickness which tapers uniformly from one end to an opposite end. The taper given to the unit facilitates draining during a washing operation of the bedding unit. However, the inclination of the upper surface of the bedding unit seems to be too small to provide an effective drainage of dung and urine when cattle use the bedding unit. Furthermore, the envelope has a smooth contact surface with the cattle. Therefore, the friction between the cattle and the contact surface of the envelope is likely to be relatively low especially if the contact surface is wet.

### SUMMARY OF THE INVENTION

The object of the present invention is to provide a floor mat, which is very comfortable for the animals to use at the same time as it is easy to keep clean.

This object is achieved with the features of claim 1. The cows are normally to be found in a presumable position in a stall. In this position, the rear end of the cow is positioned on or in the immediate vicinity of the first area of the mat. Thus, the dung and the urine from the cow in the stall are received on this area of the mat. Due to the inclined surface in this area of the mat, the dung and the urine from the cow flow out from the mat in a direction towards a manure channel arranged immediately outside the stall. Consequently, the existence of the inclined area of the mat helps keeping the mat clean from dung and urine during use. According to a preferred embodiment of the invention, said area slopes downwardly from the limit line towards said side edge of the mat with a substantially constant inclination. Thereby, an effective removing of dung and urine is achieved on the whole surface of said area. Preferably, the limit line of the contact surface has a substantially straight-line extension. In such a case, the sloping area is substantially rectangular. Alternatively, the limit line may be curved such that the sloping area obtains a shape divided from the rectangular. The side edge of the mat may have a substantially straight-line extension. Normally, a stall has a rectangular floor. Therefore, it is suitable that the floor mat has a corresponding rectangular shape with straight-line side edges.

According to the invention, the distance between the limit line of the contact surface and a said side edge of the mat is in the interval of 10 to 30 cm. The distance between the limit line and the contact surface is related to the possibility that the dung and the urine from a cow are received on the sloping area. On the other hand, if the distance is to long the area obtains an inclination, which could be too small for providing the flow of dung and urine from the mat. In order to remove the dung and the urine in an effective manner, the area of the contact surface needs to slope downwardly with an angle of at least 2°.
According to a further preferred embodiment of the invention, the lower surface of the mat comprises a first zone, which has an extension between a limit line of the lower surface and said side edge of the mat, wherein the first zone comprises a substantially smooth contact surface to the underlying surface, which is arranged to be in substantially continuous contact with the underlying surface along the whole side edge of the mat. The smooth contact surface in the first zone at the underside of the mat prevents dung and urine from penetrating in under the mat 1. The distance between the limit line of the lower surface and a said side edge of the mat may be in the interval of 1 to 10 cm.

According to a further preferred embodiment of the invention, the lower surface of the mat comprises a second zone, which is provided with at least one base surface arranged to be positioned at a distance from the underlying surface and at least one projecting element, having a contact surface with the underlying surface. Thereby, the contact surface of the mat in the second zone is reduced. Due to the reduced contact surface in the zone and the elastic properties of the material in the mat, this zone provides a more soft and elastic support of a cow than the first zone, which constitutes of a substantially homogenous material. Advantageously, a part of the second zone of the lower surface is arranged vertically below a part of said area of the upper surface, wherein the high of the projecting element, in this part of the second zone, decreases successively in a direction towards the first side edge. The successively decreasing high of the projecting elements accomplishes the inclination of the upper surface in said area. Preferably, the projecting element has a substantially plane contact surface with the underlying surface. Thereby, the projecting element provides a steady support of the mat on the underlying surface. The second zone of the lower surface of the mat may comprise a plurality of substantially equally shaped projecting elements substantially uniformly arranged in the second zone. The projecting elements may have a substantially arbitrary but functional shape.

According to a further preferred embodiment of the invention, the lower surface of the mat comprises a third zone, which comprises a recess filled with a filling material, which is arranged to form the contact surface of the third zone with the underlying surface. The supporting properties of the mat in the third zone may be varied by different choice of filling material. Preferably, said filling material has a higher elasticity than the material in the other contact surfaces of the mat with the underlying surface. Thereby, the cows obtain a very soft and elastic support on the mat in the third zone. The mat may comprise a number of zones with of varying properties in different parts of the mat. According to a further preferred embodiment of the invention, the upper surface of the mat comprises a contact surface, which is provided with a plurality of protruding elements. The high of the protruding elements is about 1 mm. Thereby, a structured contact surface is obtained which provides a good friction for the hooves of the cows on the contact surface. In general, cows seem to experience a structured contact surface as attractive both to stand on and lie on. The protruding elements may be arranged at a distance from each other such that channels are formed between adjacent protruding elements. The channels may be connected to each other in order to facilitate drainage of the contact surface by means of the channels. The protruding elements may comprise a contact surface, which has a substantially convex shape. Such shaped protruding elements provide a pleasant contact surface with no sharp edges.

According to a further preferred embodiment of the invention, the protruding elements have a substantially triangular cross section area. By such a design, it is easy to provide channels between adjacent triangular protruding elements with a specific width and which forms a connected channel system. Preferably, the protruding elements have a cross section area substantially shaped as an even sided triangle with round corners. Thereby, the connections between different channel obtain a rounded shape.

According to a further preferred embodiment of the invention, the floor mat comprises at least one prefabricated hole, which is arranged to receive fastening means for enabling mounting of the mat in a fix position on the underlying surface. The floor mat can have a thickness up to 5 cm. It is difficult to drill holes in such a thick mat of a homogenous rubber material. Thereby, the prefabricated holes facilitate considerably the mounting process of the mat in a stall. Advantageously, the prefabricated hole is provided in an area, which is located at an opposite end of the mat in relation to the sloping area. Thus, the prefabricated hole is provided in the inner wall surface of a stall. Usually, it is sufficiently to attach the mat to the underlying surface only in this area due to the weight of the mat and the good friction between the mat and the underlying surface.

### BRIEF DESCRIPTION OF THE DRAWINGS

The present invention is now to be explained more closely by means of preferred embodiments, which are disclosed as examples, and with reference to the attached drawings.
- Fig 1: shows an upper surface of a floor mat according to the invention,
- Fig 2: shows a part of a contact surface of the upper surface of the mat in Fig. 1,
- Fig 3: shows a cross section view along the plane A-A of the mat in Fig.2,
- Fig 4: shows a cross section view along the plane B-B of the mat in Fig.1,
- Fig 5: shows a cross section view along the plane C-C of the mat in Fig.1,
- Fig 6: shows a lower surface of a floor mat according to the invention and
- Fig 7: shows an alternative lower surface of a floor mat according to the invention.

### DETAILED DESCRIPTION OF PREFERRED EMBODIMENTS OF THE INVENTION

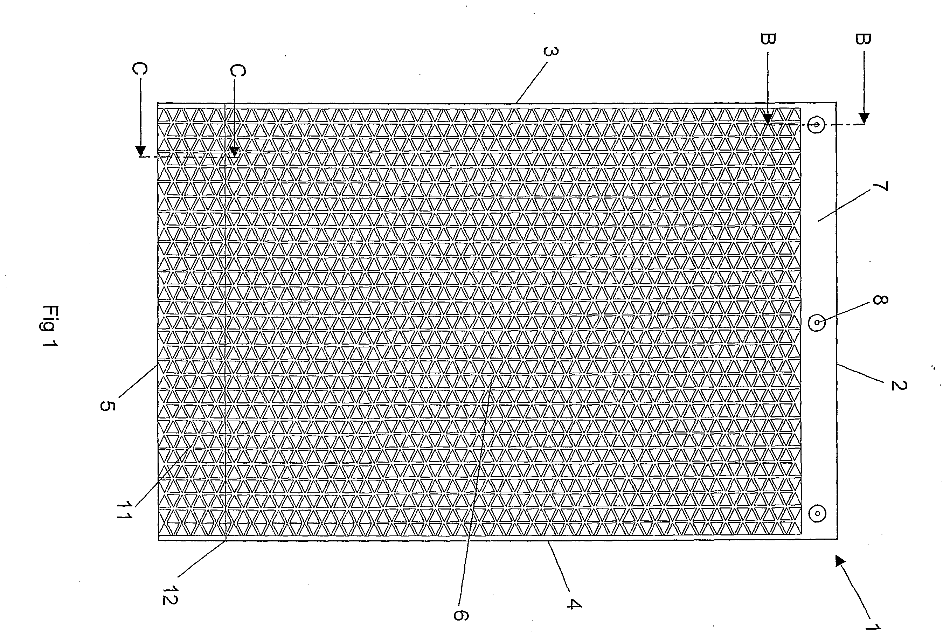

Fig 1 shows a floor mat 1 to be used by an animal such as a cow in a stall. The floor mat 1 is made of a moulded rubber material. The floor mat 1 has a shape which substantially corresponds to the shape of the stall in which the floor mat has to be mounted. In this case, the floor mat 1 has a rectangular shape. The floor mat 1 includes an inner short side edge 2 to be arranged in connection to an inner wall surface of the stall, two long side edges 3, 4 to be mounted adjacent to the respective side walls of the stall and an outer short side edge 5 to be mounted adjacent to a manure channel positioned immediately outside the stall.

The main part of the upper surface of the mat 1 comprises a contact surface 6, which is arranged to be in contact with the cow during use. The contact surface 6 of the floor mat 1 comprises, in a mounted state, a substantially plane extension except in an area 11 which has an extension between a limit line 12 of the contact surface 6 and the outer side edge 5 of the mat. The limit line 12 has a substantially straight-line extension between the long side edges 3, 4 of the floor mat 1. Since the outer side edge 5 also has a substantially straight-line extension, the area 11 constitutes a rectangular part of the upper surface of the floor mat 1. The area 11 of the upper surface slopes downwardly from the limit line 12 towards the first side edge 5. The upper surface of the mat 1 also comprises a fastening area 7 located in adjacent to the inner short side edge 2 of the mat. The fastening area 7 is provided with three prefabricated holes 8. The holes 8 are adapted to receive fastening means during a mounting process of the floor mat in the stall.

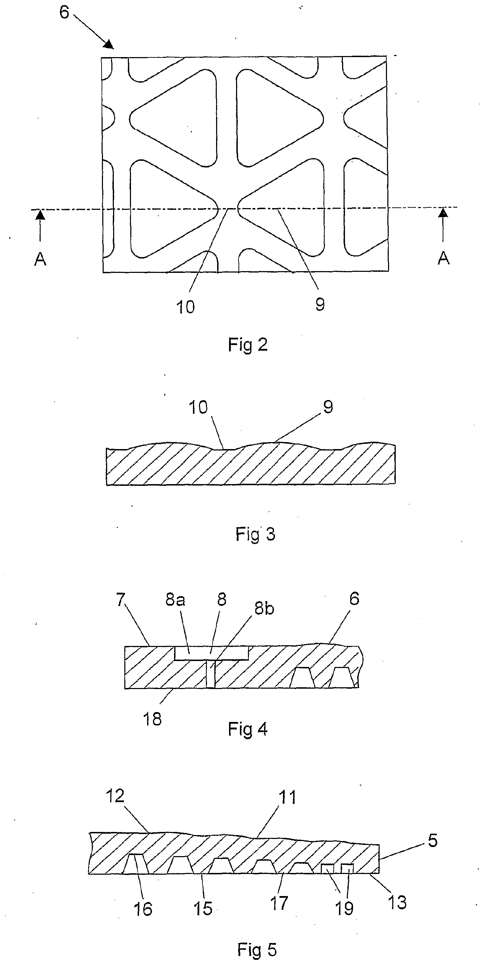

Fig 2 shows a part of the upper contact surface 6 more in detail. The contact surface 6 is provided with a plurality of protruding elements 9. Each of the protruding elements 9 have a cross section area which is substantially shaped as an even sided triangle with round corners. The protruding elements 9 are arranged at a distance from each other such that channels 10 are formed between adjacent protruding elements 9. The protruding elements 9 are arranged substantially uniformly along the contact surface 6. The channels 10 have a substantially uniform width and they constitute a connected channel system in the whole contact surface 6. The channel system comprises a large number of channels having a direction substantially perpendicular to the extension of the outer side edge 5. Thereby, it is easy to remove dung or the like from the upper contact surface 6 by means of a scraper or the like. Fig. 3 shows a cross section view of the mat along the plane A-A in Fig. 2. Each of the protruding elements 9 are provided with a contact surface, which has a substantially convex shape. The high of the protruding elements 9 is about 0,5 to 1,5 mm. Thereby, the protruding elements 9 provides a necessary friction of the contact surface 6 such that the hooves of the cows do not risk to slip when the cow is moving on the mat 1. The protruding elements 9 form a structured contact surface 6, which the cows seem to experience as attractive to be in contact with.

Fig 4 shows a cross section view of the fastening area 7 of the upper surface of the mat 1. The fastening area 7 has a smooth outer surface. The prefabricated hole 8 comprises a first part 8a for receiving a washer or a head of a bolt or the like and a more narrow second part for receiving of a part of a bolt or the like, which may be an expansion-shell bolt. The floor mat 1 has a thickness of up to 5 cm but preferably in the interval of 1,5 cm to 3 cm. However, it is difficult and time wasting to drill holes in such a thick mat of a homogenous rubber material. Due to the heat arisen in the material during such a drilling process, it is a risk that the rubber material melts in the contact surface with the drill. Consequently, the prefabricated holes 8 in the fastening area 7 facilitate considerably the mounting process of the mat 1 in a stall.

Fig 5 shows a cross section view of the mat through the sloping area 11 of the contact surface 6. The area 11 slopes downwardly from the limit line 12 towards the outer side edge 5 of the mat with a substantially constant inclination. The area 11 slopes downwardly with a specific angle in the interval 2° to 20°, preferably in the interval 2° to 10°, even more preferably in the interval 2° to 5°. However, it shall be noted that other angles not are unthinkable. The distance between the limit line 12 and the outer side edge 5 is in the interval of 10 cm to 30 cm, preferably in the interval of 15cm to 20 cm.

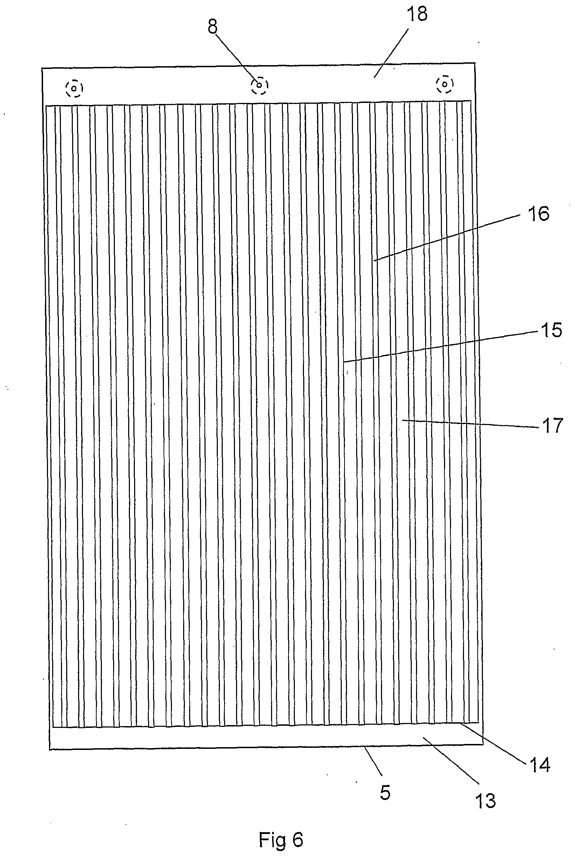

Fig. 6 shows the lower surface of one embodiment of the floor mat 1, which is arranged to be in contact with an underlying surface. Normally, a concrete floor constitutes the underlying surface in the stall. The concrete floor forms a substantially smooth underlying surface. The lower surface of the floor mat 1 comprises a first zone 13, which has an extension between a limit line 14 of the lower surface and the outer side edge 5 of the floor mat 1. The first zone 13 of the lower surface has a substantially smooth surface to be in contact with the underlying smooth surface. Thereby, the outer side edge 5 of the floor mat 1 constitutes a sealing surface against a manure channel, which is arranged adjacent to the outer side edge 5 of the floor mat 1. The distance between the limit line 14 and the outer side edge is in the interval of 1 to 10 cm.

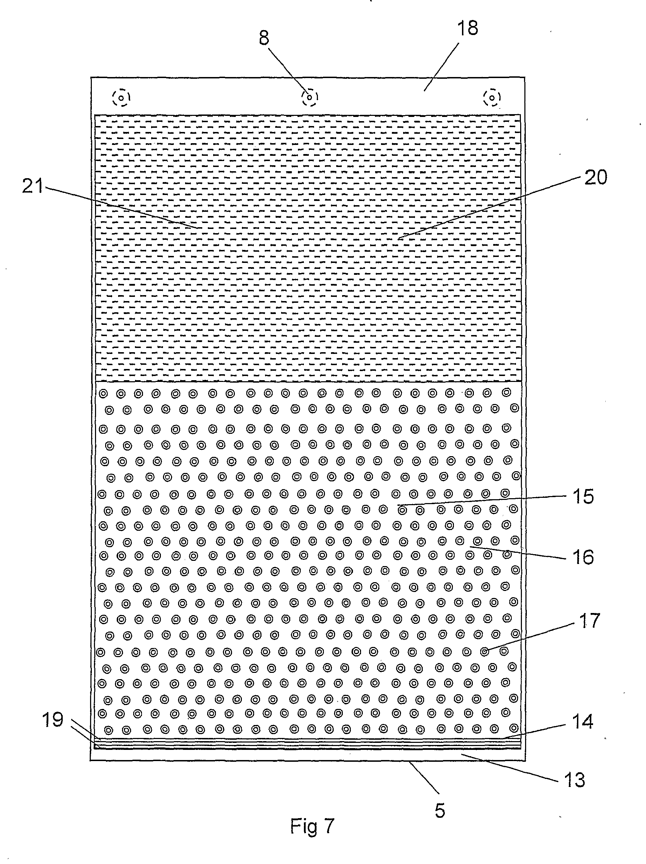

The lower surface of the floor mat 1 comprises a second zone 15. The second zone 15 is provided with a plurality of elongated base surfaces 16, which are arranged to be located at a distance from the underlying surface. Furthermore, the second zone 15 is provided with a plurality of elongated projecting elements 17, which has substantially rectangular plane contact surface to be in contact with the underlying surface. Thereby, the second zone 15 obtains a reduced contact surface with the underlying surface due to the alternating positions of the projecting elements 17 and base surfaces 16. As a result of the elasticity in the rubber material and the reduced contact surface, the second zone 15 is softer than the first zone 13. Finally, the lower surface of the mat comprises a fastening zone 18 arranged in the vicinity of the inner edge surface 2. In this zone 18, the fastening means are mounted in the holes 8 for attachment of the mat 1 in a fixed position on the underlying surface. Fig. 7 shows the lower surface of an alternative embodiment of the floor mat 1. The lower surface comprises a first zone 13, which has an extension between a limit line 14 of the lower surface and the outer side edge 5 of the floor mat 1. The first zone 13 of the lower surface has a substantially smooth contact surface to be in continuous contact-with the smooth underlying surface along the whole outer side edge 5 of the floor mat 1. Thereby, the outer side edge 5 of the floor mat 1 constitutes a sealing surface against the dung in the adjacent manure channel. In this case, the first zone 13 comprises two transverse recesses 19, see also Fig. 5. Due to the reduced contact surface in that part of the first zone 13, the first zone 13 becomes, in this case, somewhat softer than the first zone 13 in the embodiment shown in Fig. 6.

The second zone 15 of the lower surface of the mat 1 is provided with a plurality of uniformly arranged projecting elements 17. The projecting elements 17 have a substantially circular plane contact surfaces with the underlying surface. A base surface 16 is arranged at a distance from the underlying surface. In this case, the contact surface with the underlying surface is further reduced than in the second zone 15 in Fig. 6. Consequently, this second zone 15 is softer than the second zone 15 in Fig. 6. A part of the second zone 15 of the lower surface is arranged vertically below a part of the first area 11 of the upper surface, see Fig. 5. In this part of the second zone 15, the highs of the projecting elements 17 decrease successively in a direction towards the first side edge 5.

The lower surface of the mat 1 comprises a third zone 20. The third zone 20 is constituted of a recess in the homogenous rubber material, which is filed with a filling material 21. The filling material 21 is arranged to form the contact surface with the underlying surface in the third zone 20. Preferably, the filling material is a foamed rubber material, which has a higher elasticity than the homogenous rubber material in the other lower contact surfaces of the mat 1. By a suitable dimensioning of the recess an the filling material 21, the third zone 20 feels very comfortable and soft for a cow which is in contact with the upper surface of the mat 1 vertically above the third zone 20. Finally, the lower surface of the mat 1 comprises a fastening zone 18 arranged in vicinity of the inner edge surface 2. The fastening zone 18 is substantially arranged at the opposite side of the fastening area 7 of the mat 1. However, it is possible to use the above-described second zone 15 and third zone 20 in arbitrary combinations in a mat according to the present invention. It is also possible to use only one of said zones 15, 20. In such a case, said zone 15, 20 may constitute substantially the whole lower surface of the mat 1.

The mounting process of the floor mat 1 in a stall may be performed according to the below. The floor mat 1 is placed on the concrete floor in its intended mounting position in the stall. Then, three holes are drilled in the underlying concrete floor by means of the already prefabricated holes 8 in the mat 1. Thereby, the holes in the underlying concrete obtain mutually correct corresponding positions in relation to the prefabricated holes 8 in the floor mat 1. Finally, fastening means such as bolts or the like are inserted in the drilled holes 8 in the concrete floor 1 and are screwed down in the holes 8 in the underlying concrete. Consequently, due to the prefabricated holes 8 in the mat 1, it is very easy to mount the mat 1 in a stall.

Usually, the cow is positioned in a predetermined position in the stall. In this position, the rear end of the cow is positioned on or in the immediate vicinity of the first area 11 of the mat 1. Thus, the dung and the urine from the cow in the stall are received on the sloping area 11 of the mat 1. Thereby, the dung and the urine flow out from the mat 1 in a direction towards a manure channel due to the inclined surface in this area 11 of the mat 1. Consequently, the existence of the downwardly inclined area 11 makes it is easier to keep the mat 1 clean from dung and urine during use. Furthermore, the smooth contact surface in the first zone 13 at the underside of the mat 1 prevents dung from penetrating in under the mat 1. Finally, the rubber material in the mat 1 makes it very easy to clean the mat 1.

The structured pattern 9, 10 of the contact surface of the mat 1 provides a good friction between the contact surface 6 of the mat 1 and the hooves of the cows. The second zone 15 has a reduced contact surface with the underlying surface and the third zone 20 has a very elastic contact material, which forms the contact surface with the underlying surface. When a cow stands or lies on the parts of the contact surface 6, which are arranged vertically above said zones 15, 20, the weight of the cow is supported in a soft and elastically manner. It is especially important to the front portion of the cow has a very soft and elastic support since about 60 - 70 % of the weight of the cow loads on the front legs of the cow when the cow gets down to a lying position or gets up to a standing position. The above mentioned properties of the mat 1 results in that the mat 1 is very comfortable for the cows to lie on. Thereby, the cow will spent a larger time in a lying position in the stall. This result in an increased milk production of the cows, which are positioned in stalls with floor mates 1 according to the invention.

The invention is not restricted to the described embodiments disclosed in the figures, but may be varied freely within the scope of the claims.

## Claims

1. A floor mat (1) to be used by at least one animal, wherein the floor mat (1), in a mounted state, comprises an upper surface, which has a contact surface (6) with an animal, and a lower surface, which is arranged to be in a contact with an underlying surface, the contact surface (6) comprises a plane extension except in an area (11), which has an extension between a limit line (12) of the contact surface (6) and a side edge (5) of the mat (1), wherein said area (11) slopes downwardly from the limit line (12) towards the side edge (5) of the mat (1), **characterised in that** the distance between the limit line (12) of the contact surface (6) and a said side edge (5) of the mat (1) is in the interval of 10 to 30 cm and wherein that said area (11) of the contact surface (6) slopes downwardly with an angle of at least 2°.

2. A floor mat according to claim 1, **characterised in that** said area (11) slopes downwardly from the limit line (12) towards said side edge (5) of the mat (1) with a substantially constant inclination.

3. A floor mat according to claim 1 or 2, **characterised in that** the limit line (12) of the contact surface (6) surface has a substantially straight-line extension.

4. A floor mat according to any one of the preceding claims, **characterised in that** said side edge (5) of the mat (1) has a substantially straight-line extension.

5. A floor mat according to any one of the preceding claims, **characterised in that** the lower surface of the mat comprises a first zone (13), which has an extension between a limit line (14) of the lower surface and said side edge (5) of the mat (1), wherein the first zone (13) comprises a substantially smooth contact surface to the underlying surface, which is arranged to be in continuous contact with the underlying surface along the whole side edge (5) of the mat (1).

6. A floor mat according to claim 5, **characterised in that** the distance between the limit line (14) of the lower surface and a said side edge (5) of the mat is in the interval of 1 to 10 cm.

7. A floor mat according to any one of the preceding claims, **characterised in that** the lower surface of the mat comprises a second zone (15), which is provided with at least one base surface (16) arranged to be positioned at a distance from the underlying surface and at least one projecting element (17), having a contact surface with the underlying surface.

8. A floor mat according to claim 7, **characterised in that** a part of the second zone (15) of the lower surface is arranged vertically below a part of said area (11) of the upper surface, wherein the high of the projecting element (17), in this part of the second zone (15), decreases successively in a direction towards the first side edge (5).

9. A floor mat according to claim 7 or 8, **characterised in that** the projecting element (17) has a substantially plane contact surface with the underlying surface.

10. A floor mat according to any one of the claims 7 to 9, **characterised in that** the second zone (15) of the lower surface of the mat (1) comprises a plurality of substantially equally shaped projecting elements (17) substantially uniformly arranged in the second zone (15).

11. A floor mat according to any one of the preceding claims, **characterised in that** the lower surface of the mat (1) comprises a third zone (20), which comprises a recess filed with a filling material (21), which is arranged to form the contact surface of the third zone (20) with the underlying surface.

12. A floor mat according to claim 11, **characterised in that** said filling material (21) has a higher elasticity than the material in other contact surfaces of the mat (1) with the underlying surface.

13. A floor mat according to any one of the preceding claims, **characterised in that** the upper surface of the mat comprises a contact surface (6), which is provided with a plurality of protruding elements (9).

14. A floor mat according to claim 13, **characterised in that** the protruding elements (9) are arranged at a distance from each other such that channels (10) are formed between adjacent protruding elements (9).

15. A floor mat according to claim 13 or 14, **characterised in that** the protruding elements (9) comprise a contact surface, which has a substantially convex shape.

16. A floor mat according to any one of the claims 10 to 12, **characterised in that** the protruding elements (9) have a substantially triangular cross section area.

17. A floor mat according to claim 16, **characterised in that** the protruding elements (9) have a cross section area substantially shaped as an even sided triangle with round corners.

18. A floor mat according to any one of the preceding claims, **characterised in that** the floor mat (1) comprises at least one prefabricated hole (8), which is arranged to receive fastening means for enabling mounting of the mat (1) in a fixed position on the underlying surface.

19. A floor mat according to claim 18, **characterised in that** the prefabricated hole (8) is provided in an area (7), which is located at an opposite end of the mat (1) in relation to the sloping area (11).

## Patentansprüche

1. Bodenmatte (1), die von wenigstens einem Tier zu verwenden ist, wobei die Bodenmatte (1) in einem angebrachten Zustand Folgendes umfasst: eine obere Oberfläche, die eine Berührungsoberfläche (6) mit einem Tier aufweist, und eine untere Oberfläche, die angeordnet ist, mit einer darunterliegenden Oberfläche in Berührung zu stehen, wobei die Berührungsoberfläche (6) eine ebene Erweiterung umfasst, außer in einem Bereich (11), der eine Erweiterung zwischen einer Grenzlinie (12) der Berührungsoberfläche (6) und einer Seitenkante (5) der Matte (1) aufweist, wobei der Bereich (11) von der Grenzlinie (12) zur Seitenkante (5) der Matte (1) hin nach unten abfällt, **dadurch gekennzeichnet, dass** die Entfernung zwischen der Grenzlinie (12) der Berührungsoberfläche (6) und einer Seitenkante (5) der Matte (1) im Abstand von 10 bis 30 cm liegt und wobei dieser Bereich (11) der Berührungsoberfläche (6) mit einem Winkel von wenigstens 2° nach unten abfällt.

2. Bodenmatte nach Anspruch 1, **dadurch gekennzeichnet, dass** der Bereich (11) von der Grenzlinie (12) zur Seitenkante (5) der Matte (1) hin mit einer im Wesentlichen konstanten Neigung abfällt.

3. Bodenmatte nach Anspruch 1 oder 2, **dadurch gekennzeichnet, dass** die Grenzlinie (12) der Berührungsoberfläche (6) Oberfläche eine im Wesentlichen geradlinige Erweiterung aufweist.

4. Bodenmatte nach einem der vorhergehenden Ansprüche, **dadurch gekennzeichnet, dass** die Seitenkante (5) der Matte (1) eine im Wesentlichen geradlinige Erweiterung aufweist.

5. Bodenmatte nach einem der vorhergehenden Ansprüche, **dadurch gekennzeichnet, dass** die untere Oberfläche der Matte eine erste Zone (13) umfasst, die eine Erweiterung zwischen einer Grenzlinie (14) der unteren Oberfläche und der Seitenkante (5) der Matte (1) aufweist, wobei die erste Zone (13) eine im Wesentlichen glatte Berührungsoberfläche mit der darunterliegenden Oberfläche umfasst, die angeordnet ist, um in ständiger Berührung mit der darunterliegenden Oberfläche entlang der gesamten Seitenkante (5) der Matte (1) zu stehen.

6. Bodenmatte nach Anspruch 5, **dadurch gekennzeichnet, dass** die Entfernung zwischen der Grenzlinie (14) der unteren Oberfläche und der Seitenkante (5) der Matte im Abstand von 1 bis 10 cm liegt.

7. Bodenmatte nach einem der vorhergehenden Ansprüche, **dadurch gekennzeichnet, dass** die untere Oberfläche der Matte eine zweite Zone (15) umfasst, die mit wenigstens einer Basisoberfläche (16), die angeordnet ist, in einer Entfernung von der darunterliegenden Oberfläche positioniert zu sein, und mit wenigstens einem vorragenden Element (17) das eine Berührungsoberfläche mit der darunterliegenden Oberfläche aufweist, versehen ist.

8. Bodenmatte nach Anspruch 7, **dadurch gekennzeichnet, dass** ein Teil der zweiten Zone (15) der unteren Oberfläche vertikal unter einem Teil des Bereichs (11) der oberen Oberfläche angeordnet ist, wobei sich die Höhe des vorragenden Elements (17) in diesem Teil der zweiten Zone (15) in einer Richtung zur ersten Seitenkante (5) hin stufenweise verringert.

9. Bodenmatte nach Anspruch 7 oder 8, **dadurch gekennzeichnet, dass** das vorragende Element (17) eine im Wesentlichen ebene Berührungsoberfläche mit der darunterliegenden Oberfläche aufweist,

10. Bodenmatte nach einem der Ansprüche 7 bis 9, **dadurch gekennzeichnet, dass** die zweite Zone (15) der unteren Oberfläche der Matte (1) mehrere im Wesentlichen gleich geformte vorragende Elemente (17) umfasst, die im Wesentlichen gleichmäßig in der zweiten Zone (15) angeordnet sind.

11. Bodenmatte nach einem der vorhergehenden Ansprüche, **dadurch gekennzeichnet, dass** die untere Oberfläche der Matte (1) eine dritte Zone (20) umfasst, die eine Vertiefung umfasst, die mit einem Füllmaterial (21) gefüllt ist, das angeordnet ist, um die Berührungsoberfläche der dritten Zone (20) mit der darunterliegenden Oberfläche auszubilden.

12. Bodenmatte nach Anspruch 11, **dadurch gekennzeichnet, dass** das Füllmaterial (21) eine höhere Elastizität aufweist als das Material in anderen Berührungsoberflächen der Matte (1) mit der darunterliegenden Oberfläche.

13. Bodenmatte nach einem der vorhergehenden Ansprüche, **dadurch gekennzeichnet, dass** die obere Oberfläche der Matte eine Berührungsoberfläche (6) umfasst, die mit mehreren vorstehenden Elementen (9) versehen ist.

14. Bodenmatte nach Anspruch 13, **dadurch gekennzeichnet, dass** die vorstehenden Elemente (9) in einer Entfernung voneinander angeordnet sind, sodass Kanäle (10) zwischen nebeneinanderliegenden vorstehenden Elementen (9) ausgebildet sind.

15. Bodenmatte nach Anspruch 13 oder 14, **dadurch gekennzeichnet, dass** die vorstehenden Elemente (9) eine Berührungsoberfläche umfassen, die eine im Wesentlichen konvexe Form aufweist.

16. Bodenmatte nach einem der Ansprüche 10 bis 12, **dadurch gekennzeichnet, dass** die vorstehenden Elemente (9) eine im Wesentlichen dreieckige Querschnittsfläche aufweisen.

17. Bodenmatte nach Anspruch 16, **dadurch gekennzeichnet, dass** die vorstehenden Elemente (9) eine Querschnittsfläche aufweisen, die im Wesentlichen als ein gleichseitiges Dreieck mit runden Ecken gestaltet ist.

18. Bodenmatte nach einem der vorhergehenden Ansprüche, **dadurch gekennzeichnet, dass** die Bodenmatte (1) wenigstens ein vorgefertigtes Loch (8) umfasst, das angeordnet ist, Befestigungsmittel aufzunehmen, um das Anbringen der Matte (1) in einer festen Position auf der darunterliegenden Oberfläche zu ermöglichen.

19. Bodenmatte nach Anspruch 18, **dadurch gekennzeichnet, dass** das vorgefertigte Loch (8) in einem Bereich (7) bereitgestellt ist, der sich in Bezug auf den abfallenden Bereich (11) an einem gegenüberliegenden Ende der Matte (1) befindet.

## Revendications

1. Tapis de sol (1) destiné à être utilisé par au moins un animal, le tapis de sol (1) comprenant, dans un état monté, une surface supérieure, laquelle a une surface de contact (6) avec un animal, et une surface inférieure, laquelle est agencée de manière à être en contact avec une surface sous-jacente, la surface de contact (6) comprenant une étendue plane sauf dans une région (11), laquelle a une étendue entre une ligne de limite (12) de la surface de contact (6) et un bord latéral (5) du tapis (1), ladite région (11) étant inclinée vers le bas à partir de la ligne limite (12) en direction du bord latéral (5) du tapis (1), **caractérisé en ce que** la distance entre la ligne limite (12) de la surface de contact (6) et un dit bord latéral (5) du tapis (1) est comprise dans l'intervalle de 10 à 30 cm, et ladite région (11) de la surface de contact (6) étant inclinée vers le bas suivant un angle d'au moins 2°.

2. Tapis de sol selon la revendication 1, **caractérisé en ce que** ladite région (11) est inclinée vers le bas à partir de la ligne limite (12) en direction dudit bord latéral (5) du tapis (1) suivant une inclinaison sensiblement constante.

3. Tapis de sol selon la revendication 1 ou 2, **caractérisé en ce que** la ligne limite (12) de la surface de contact (6) a une étendue sensiblement en ligne droite.

4. Tapis de sol selon l'une quelconque des revendications précédentes, **caractérisé en ce que** ledit bord latéral (5) du tapis (1) a une étendue sensiblement en ligne droite.

5. Tapis de sol selon l'une quelconque des revendications précédentes, **caractérisé en ce que** la surface inférieure du tapis comprend une première zone (13), laquelle a une étendue entre une ligne limite (14) de la surface inférieure et ledit bord latéral (5) du tapis (1), la première zone (13) comprenant une surface de contact sensiblement lisse avec la surface sous-jacente, laquelle surface de contact est agencée pour être en contact continu avec la surface sous-jacente le long de tout le bord latéral (5) du tapis (1).

6. Tapis de sol selon la revendication 5, **caractérisé en ce que** la distance entre la ligne limite (14) de la surface inférieure et un dit bord latéral (5) du tapis est comprise dans l'intervalle de 1 à 10 cm.

7. Tapis de sol selon l'une quelconque des revendications précédentes, **caractérisé en ce que** la surface inférieure du tapis comprend une deuxième zone (15), laquelle est dotée d'au moins une surface de base (16) agencée de manière à être positionnée à une distance de la surface sous-jacente, et au moins un élément saillant (17) ayant une surface de contact avec la surface sous-jacente.

8. Tapis de sol selon la revendication 7, **caractérisé en ce qu'**une partie de la deuxième zone (15) de la surface inférieure est agencée verticalement en dessous d'une partie de ladite région (11) de la surface supérieure, le sommet de l'élément saillant (17), dans cette partie de la deuxième zone (15), diminuant successivement dans une direction vers le premier bord latéral (5).

9. Tapis de sol selon la revendication 7 ou 8, **caractérisé en ce que** l'élément saillant (17) a une surface de contact sensiblement plane avec la surface sous-jacente.

10. Tapis de sol selon l'une quelconque des revendications 7 à 9, **caractérisé en ce que** la deuxième zone (15) de la surface inférieure du tapis (1) comprend une pluralité d'éléments saillants (17) sensiblement de même forme agencés sensiblement uniformément dans la deuxième zone (15).

11. Tapis de sol selon l'une quelconque des revendications précédentes, **caractérisé en ce que** la surface inférieure du tapis (1) comprend une troisième zone (20), laquelle comprend un évidement rempli d'un matériau de remplissage (21), lequel est agencé de manière à former la surface de contact de la troisième zone (20) avec la surface sous-jacente.

12. Tapis de sol selon la revendication 11, **caractérisé en ce que** ledit matériau de remplissage (21) a une plus grande élasticité que le matériau dans d'autres surfaces de contact du tapis (1) avec la surface sous-jacente.

13. Tapis de sol selon l'une quelconque des revendications précédentes, **caractérisé en ce que** la surface supérieure du tapis comprend une surface de contact (6), laquelle est dotée d'une pluralité d'éléments protubérants (9).

14. Tapis de sol selon la revendication 13, **caractérisé en ce que** les éléments protubérants (9) sont agencés à une distance les uns des autres de telle sorte que des canaux (10) soient formés entre des éléments protubérants (9) adjacents.

15. Tapis de sol selon la revendication 13 ou 14, **caractérisé en ce que** les éléments protubérants (9) comprennent une surface de contact, laquelle a une forme sensiblement convexe.

16. Tapis de sol selon l'une quelconque des revendications 10 à 12, **caractérisé en ce que** les éléments protubérants (9) ont une aire en section transversale sensiblement triangulaire.

17. Tapis de sol selon la revendication 16, **caractérisé en ce que** les éléments protubérants (9) ont une aire en section transversale sensiblement formée en tant que triangle équilatéral à coins arrondis.

18. Tapis de sol selon l'une quelconque des revendications précédentes, **caractérisé en ce que** le tapis de sol (1) comprend au moins un trou préfabriqué (8), lequel est agencé de manière à recevoir des moyens de fixation pour permettre le montage du tapis (1) dans une position fixe sur la surface sous-jacente.

19. Tapis de sol selon la revendication 18, **caractérisé en ce que** le trou préfabriqué (8) est prévu dans une région (7) qui est située à une extrémité opposée du tapis (1) par rapport à la région inclinée (11).
